Europäisches Patentamt

European Patent Office

Office européen des brevets

(11) Veröffentlichungsnummer: **0 347 656**
**A1**

(12) ## EUROPÄISCHE PATENTANMELDUNG

(21) Anmeldenummer: 89110351.7

(22) Anmeldetag: 08.06.89

(51) Int. Cl.⁴: **B22F 3/08 , B01J 3/08**

(30) Priorität: 24.06.88 DE 3821304

(43) Veröffentlichungstag der Anmeldung:
**27.12.89 Patentblatt 89/52**

(84) Benannte Vertragsstaaten:
**AT BE CH DE ES FR GB GR IT LI LU NL SE**

(71) Anmelder: **Kernforschungsanlage Jülich GmbH
Wilhelm-Johnen-Strasse
D-5170 Jülich(DE)**

Anmelder: **Hampel, Heinrich, Dr.-Ing.
Jülicher Strasse 336
D-5100 Aachen(DE)**

(72) Erfinder: **Stöver, Detlev, Dr.
Taubenforst 9
D-5162 Niederzier(DE)**
Erfinder: **Hampel, Heinrich, Dr.
Jülicher Strasse 336
D-5100 Aachen(DE)**

(74) Vertreter: **Habbel, Hans-Georg, Dipl.-Ing.
Postfach 3429 Am Kanonengraben 11
D-4400 Münster(DE)**

(54) **Explosionskammer zur Werkstoffbearbeitung durch Explosionsverfahren.**

(57) Bei eines Explosionskammer oder einem Autoklaven wird vorgeschlagen, dass die Sprenggase sich nach Durchführen des Sprengvorganges nicht entspannen können, sondern ausgenutzt werden können, um weitere Bearbeitungsverfahren für den zu bildenden Festkörper auszuführen.

**Fig. 1**

EP 0 347 656 A1

## Explosionskammer zur Werkstoffbearbeitung durch Explosionsverfahren

Die Erfindung bezieht sich auf eine Explosionskammer gemäß dem Oberbegriff des Hauptanspruches und auf ein Verfahren zur Verdichtung von metallischen, keramischen oder aus anderen Werkstoffen bestehenden Pulvern zur Herstellung von Festkörpern.

In der gattungsbildenden DE-37 10 669 C1 wird eine Explosionskammer beschrieben, die im Prinzip aus zwei Explosionskammern aufgebaut ist, wobei in der inneren Explosionskammer ein Kammerhohlraum geschaffen wird, der als Arbeitskammer dient. Dieser bekannten Anordnung liegt die Aufgabe zugrunde, eine Explosionskammer zu schaffen, bei der auch ein hohes Vakuum kostengünstig erzielt werden kann, so daß damit die Herstellung mehrschichtiger dünner Blech-und Folienplattierungen, insbesondere mit Faserstrukturen auf explosivem Wege möglich ist.

Die eigentliche Arbeitskammer ist von der zweiten Kammer getrennt und die zweite Kammer dient im Prinzip nur zur Erzeugung des Vakuums.

In der Zeitschrift Ber. Dt. Keram. Ges. 50 (1973) Nr. 3, Seite 75 ff. wird die Verdichtung von Keramik- und Metallpulvern sowie deren Mischungen durch Explosionsdruck beschrieben. Für die Verdichtung von Metall- oder Keramikpulvern kann ein indirektes Verdichtungsverfahren eingesetzt werden, bei dem ein Stempel zur Druckübertragung verwendet wird oder ein zunächst auf eine hohe Geschwindigkeit beschleunigtes Geschoß durch Abbremsung die Verdichtungsarbeit am pulverförmigen Werkstoff leistet.

Bei der sogenannten Direktverdichtung liegt eine unmittelbare Einwirkung des vom Sprengstoff erzeugten hohen Druckes, z. B. auf ein Rohr, das das zu verdichtende Pulver enthält, vor. Der bei der Detonation des Sprengstoffes erzeugte hohe Druck führt zum Zusammendrücken des Rohres und damit zur Verdichtung des im Inneren befindlichen Pulvers.

Bei beiden Verfahren wird der hohe Druck, die Explosivstoffe bei der Detonation entwickeln, zur Verdichtung oder zum Fügen von Pulvern zu Festkörpern ausgenutzt, wobei der Vorteil gegenüber anderen bekannten Verfahren darin liegt, daß beim sogenannten "Explosivkompaktieren" eine hohe Dichte erzielt wird, die ohne größeren apparativen Aufwand erreicht werden kann.

Nachteilig bei dem bekannten, mit Explosivdruck arbeitenden Verfahren ist, daß es nach der Verdichtung im Kern des zu erzielenden Festkörpers zur Ent stehung poröser Zonen, zu Aufschmelzungen und zu Rissen kommt. Insbesondere durch die sich nach dem Übergang der Schockwellenfront gewaltig entwickelnde Entspannungswelle verursacht Risse und sehr häufig auch Zerstörungen des verpreßten Körpers.

Der Erfindung liegt die Aufgabe zugrunde, eine Explosionskammer zu schaffen, mit der das Verdichten von Keramik- oder Metall- oder anderen Pulvern durch Explosionsdruck möglich ist, ohne daß eine Entspannung des gebildeten Festkörpers eintreten kann.

Diese der Erfindung zugrundeliegende Aufgabe wird durch die Lehre des Hauptanspruches gelöst. Vorteilhafte Ausgestaltungen sind in den Unteransprüchen 2 bis 8 erläutert.

Weiterhin liegt der Erfindung die Aufgabe zugrunde, ein Verfahren zu schaffen, mit dem ein entspannungsfreies Verdichten von aus Keramik-, Metall- oder anderen Pulvern gebildeten Festkörpern möglich ist.

Diese der Erfindung zugrundeliegende Aufgabe wird durch die Lehre des Anspruches 10 gelöst und vorteilhafte Ausgestaltungen sind in den weiteren Unteransprüchen erläutert.

Mit anderen Worten ausgedrückt, wird gemäß der Erfindung vorgeschlagen, eine Explosionskammer zu schaffen, in der die Explosivschwaden nicht nur während der Detonation des Sprengstoffes ihre Arbeit ausführen und sich danach sofort entspannen, sondern die Sprengschwaden bleiben weiter unter hohem Druck und entweder wird die normalerweise auftretende Entspannung gezielt abgebaut oder aber es werden sogar zusätzliche Arbeitsgase eingeführt, um somit eine Kombination eines mit Explosivdruck arbeitenden Verdichtungs- oder Fügevorganges mit einem nach dem so genannten "kaltisostatischen Preßverfahren", "heißisostatischem Preßverfahrens" oder "Sinterverfahrens" arbeitenden Arbeitsweise zu erzielen.

Durch die erfindungsgemäß vorgesehene kolbenartige Wand in der Explosivkammer wird erreicht, daß nach der Detonation des Sprengstoffes diese Wand in Bewegung gesetzt wird, in den Aufnahmeraum für das Pulver und den zu bildenden Festkörper vordringt und dabei das Pulver verdichtet. Im Gegensatz zu allen bisherigen Explosionsverfahren wird jedoch der Auslauf der explosiven Schwaden nicht zugelassen, sondern erfindungsgemäß werden die Schwaden gezielt eingesetzt, um weitere Bearbeitungsprozesse durchzuführen und das ganze System bleibt unter hohem Druck.

Die erfindungsgemäßen Vorschläge ermöglichen eine Minderung der Intensität der sehr oft die Werkstücke zerstörenden Entspannungswelle, auch eine weitere Durchführung eines Prozesses eines nach Zeit, Temperatur und Druck genauer gesteuerten Diffusion-und/oder Rekristallisationsvorganges, wobei auch eine Wärmebehandlung unter Schutzgas vorgenommen werden kann, um so die Festigkeit und Betriebseigenschaften des zu bildenden Festkörpers zu optimieren.

Schließlich ist es gemäß der Erfindung möglich, daß durch Wahl der Sprengstoffart, Form des Sprengstoffraumes und Form des Aufnahmeraumes sowie Abmessungen und Arten der kolbenartigen Wand, das Verfahren auf verschiedene Energieniveaus oder aber optimal tech nologisch für den Werkstofftyp des Werkstückes zu steuern, wobei auch die kolbenartige Wand zum integralen Teil des Werkstückes werden kann.

Ein Ausführungsbeispiel der Erfindung wird nachfolgend anhand der Zeichnungen erläutert. Die Zeichnungen zeigen dabei in

Fig. 1 rein schematisch eine erste Ausführungsform einer Explosionskammer, in

Fig. 2 eine abgeänderte Ausführungsform der Explosionskammer, in

Fig. 3 wiederum eine abgeänderte Ausführungsform der Explosionskammer, in

Fig. 4 in größerem Maßstab einen Ausschnitt aus der kolbenartigen Wand einer Explosionskammer und in

Fig. 5 eine abgeänderte Ausführungsform einer Explosionskammer.

In den Zeichnungen ist mit 5 eine Explosionskammer bezeichnet, in der ein Aufnahmeraum 1 für das zu verdichtende Metall- oder Keramikpulver, aus welchem die Festkörper gebildet werden sollen, vorgesehen ist. Dieser Aufnahmeraum 1 wird von einem Sprengstoffraum 2 durch eine kolbenartige Wand 6 getrennt. Der Aufnahmeraum 1 steht mit einer Vakuumanlage 3 und der Sprengstoffraum 2 mit einer Hochdruckanlage 4 in Verbindung. Die kolbenartige Wand 6 kann sich in dem durch die beiden Räume 1 und 2 gebildeten zylinderartigen Raum der Explosionskammer 5 bewegen.

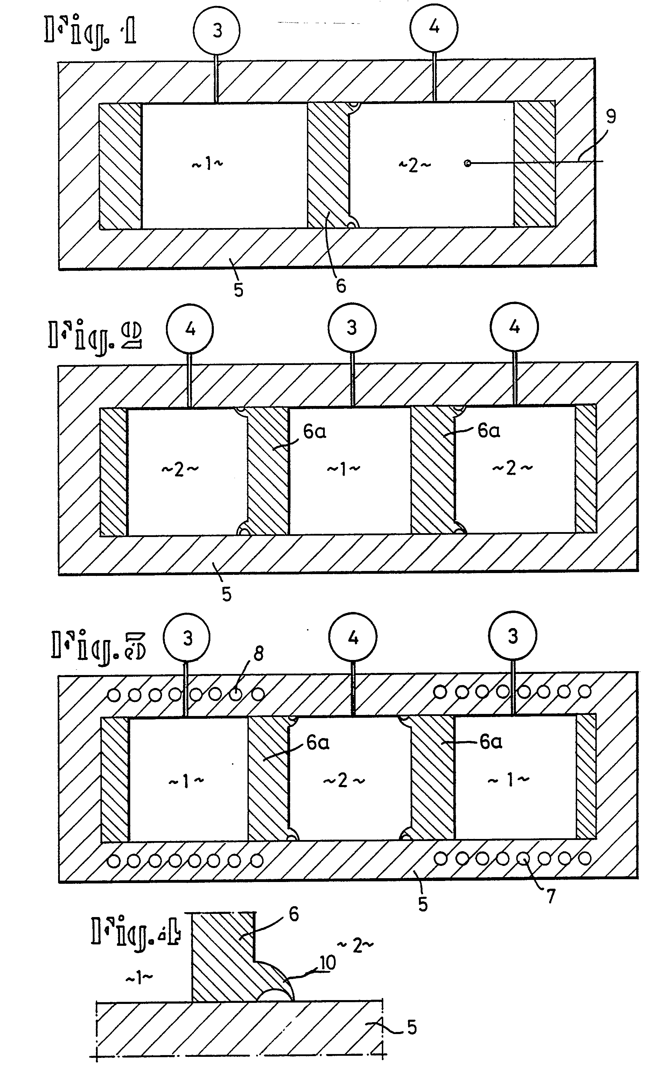

Bei der Ausführungsform gemäß Fig. 2 sind zwei kolbenartige Wände 6a vorgesehen, die zwischen sich den Aufnahmeraum 1 für den zu bildenden Festkörper einschließen, während beiderseits der Wände 6a Sprengstoffräume 2 gebildet sind. Ebenso sind Vakuum- und Hochdruckanlagen 3, 4 vorgesehen.

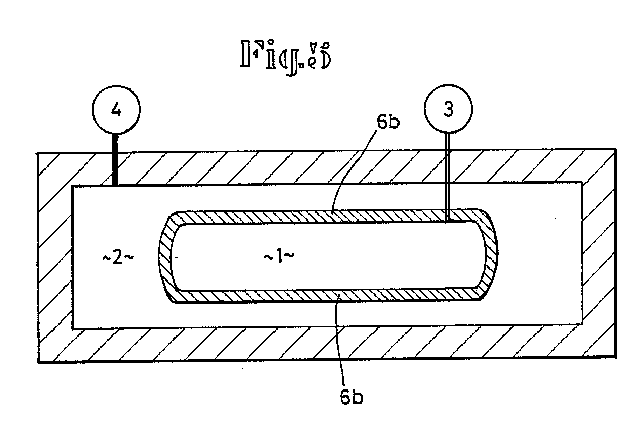

Bei der Ausführungsform gemäß Fig. 3 sind wiederum zwei kolbenartige Wände 6a vorgesehen, die zwischen sich aber den Sprengstoffraum 2 einschließen. So werden zwei Aufnahmeräume 1 für den zu bildenden Festkörper geschaffen Ebenso sind Vakuum- und Hochdruckanlagen 3, 4 vorgesehen. Außerdem ist in Fig. 3 angedeutet, daß die Wandung der Explosionskammer 5 mit einem Heiz- oder Kühlsystem 7 bzw. 8 ausgerüstet sein kann.

Bei 9 ist in Fig. 1 rein schematisch die Zündvorrichtung für den im Sprengstoffraum 2 befindlichen Sprengstoff angedeutet.

In Fig. 4 ist in größerem Maßstab die Wandung der Explosionskammer 5 und ein Teil der kolbenartigen Wand 6 dargestellt, und es ist erkennbar, daß im Grenzbereich zwischen der kolbenartigen Wand 6 und der Wandung der Explosionskammer 5 eine Dichtung aus der Wand 6 ausgeformt oder an der Wand 6 angeordnet ist, die zum Sprengstoffraum 2 hin gerichtet ist. Durch Zünden des Sprengstoffes wird diese Dichtung 10 dicht an die Wandung der Explosionskammer 5 angelegt und verhindert damit, daß Sprengstoffschwaden in den Aufnahmeraum 1 eindringen können. Gleichzeitig kann diese Dichtung 10 auch eine Zurückbewegung der kolbenartigen Wand mit verhindern.

Über die Hochdruckanlage 4 kann z. B. Argon unter einem Druck von 2000 bis 3000 bar zugeführt werden.

In Fig. 5 ist eine Ausführungsform der Explosionskammer 5 dargestellt, bei welcher der das zu verdichtende Pulver aufnehmende Aufnahmeraum 1 innerhalb des ihn komplett umgebenden Sprengstoffraumes 2 angeordnet ist. Das zu verdichtende Pulver ist in seinem Aufnahmeraum 1 von dem Sprengstoffraum 2 durch eine Wand 6b getrennt, die bei Zündung des Sprengstoffes zusammengedrückt wird und damit die Verdichtung des Pulvers bewirkt.

Anstelle einer massiven Explosionskammer 5 kann auch eine Kammer 5 eingesetzt werden, die aus mehreren ineinandergeschachtelten Bauelementen besteht. Bei einer solchen Anordnung ist es möglich, daß sich die berührenden Wandflächen der ineinandergeschachtelten Bauteile miteinander verschweißen und weiterhin ist es möglich, daß zwischen die einzelnen Bauteile eine eine sehr schlechte Wärmeleitfähigkeit aufweisende Schicht eingesetzt wird, so daß die Explosionswärme über einen langen Zeitraum in der Explosionskammer aufrechterhalten werden kann.

Durch die erfindungsgemäße Anordnung wird erreicht, daß die Explosionsgase oder -schwaden nicht nur während der Detonation des Sprengstoffes ihre Arbeit ausführen und sich danach entspannen können, so daß dadurch in dem zu bildenden Festkörper Entspannungsrisse bilden können, sondern nach Abschluß des Explosionsvorganges bleiben die Sprengschwaden weiter unter hohem Druck. Diese Sprengschwaden können ausgenutzt werden, um ein weiteres Bearbeitungsverfahren, wie beispielsweise ein Sinterverfahren, ein kalt isostatisches Pressen oder ein heiß isostatisches Pressen durchzuführen.

**Ansprüche**

1. Explosionskammer (5) zur Werkstoffbearbeitung durch Explosionsverfahren mit zwei Räumen (1, 2), wobei wenigstens ein Raum an eine Vakuumanlage (3) angeschlossen ist, dadurch gekennzeichnet, daß die beiden Räume (1, 2) durch wenigstens eine bewegliche oder verformbare Wand (6, 6a, 6b) voneinander getrennt sind, ein Raum als Aufnahmeraum (1) für zu verdichtendes Metall- oder Keramikpulver dient und an die Vakuumanlage (3) angeschlossen ist und der andere Raum als Sprengstoffraum (2) dient und an eine Hochdruckanlage (4) für gasförmige Stoffe angeschlossen ist.

2. Explosionskammer nach Anspruch 1, dadurch gekennzeichnet, daß die Wand (6b) als verformbare Umhüllung des Aufnahmeraumes (1) dient.

3. Explosionskammer nach Anspruch 1, dadurch gekennzeichnet, daß die Wand (6) als kolbenartige Wand ausgebildet ist.

4. Explosionskammer nach Anspruch 1, dadurch gekennzeichnet, daß zwei kolbenartige Wände (6a) vorgesehen sind, zwischen denen der Sprengstoffraum (2) ausgebildet ist.

5. Explosionskammer nach Anspruch 1, dadurch gekennzeichnet, daß zwei kolbenartige Wände (6a) vorgesehen sind, zwischen denen der Aufnahmeraum (1) ausgebildet ist.

6. Explosionskammer nach einem oder mehreren der vorhergehenden Ansprüche, dadurch gekennzeichnet, daß die kolbenartige Wand (6) bzw. die kolbenartigen Wände (6a) mit durch den Sprengvorgang wirksam werdenden Dichtungen (10) ausgerüstet sind, die sich abdichtend an die Wandung der als Zylinder wirkenden Explosionskammer (5) anlegen.

7. Explosionskammer nach einem oder mehreren der vorhergehenden Ansprüche, dadurch gekennzeichnet, daß wenigstens der Aufnahmeraum (1) mit einer Erwärmungs- oder Kühlungseinrichtung (7, 8) ausgerüstet ist.

8. Explosionskammer nach einem oder mehreren der vorhergehenden Ansprüche, dadurch gekennzeichnet, daß im Aufnahmeraum (1) der Form des zu verdichtenden Körpers entsprechende Matrizen angeordnet sind.

9. Explosionskammer nach einem oder mehreren der vorhergehenden Ansprüche, dadurch gekennzeichnet, daß die Explosionskammer (5) aus ineinander geschachtelten Hohlkörpern gebildet ist.

10. Verfahren zum Verdichten oder Fügen von metallischen, keramischen oder anderen pulverförmigen Werkstoffen zur Herstellung von Festkörpern unter Einsatz eines Explosivverfahrens, dadurch gekennzeichnet, daß nach Durchführen der Sprengstoffexplosion die dabei entstehenden Sprengschwaden sich nicht entspannen und der Druck der Sprengschwaden auf den oder die gebildeten Festkörper weiter aufrechterhalten wird und die so erzielte Hochdruckatmosphäre im Sprengstoffraum in kontrollierter Weise zur weiteren Bearbeitung des Festkörpers benutzt wird.

11. Verfahren nach Anspruch 10, dadurch gekennzeichnet, daß vor Durchführen der Sprengstoffexplosion das im Aufnahmeraum befindliche metallische, keramische oder aus anderen Werkstoffen bestehende Pulver einem Hochvakuum unterworfen wird.

12. Verfahren nach Anspruch 10 und 11, dadurch gekennzeichnet, daß die im Sprengstoffraum entstehenden Sprengschwaden entweder kontrolliert entspannt oder kontrolliert komprimiert werden.

13. Verfahren nach einem oder mehreren der vorhergehenden Ansprüche 10 bis 12, dadurch gekennzeichnet, daß die im Sprengstoffraum entstehenden Sprengschwaden oder die über die Hochdruckanlage zugeführten Gase erwärmt oder gekühlt werden.

14. Verfahren nach einem oder mehreren der vorhergehenden Ansprüche 10 bis 13, dadurch gekennzeichnet, daß das dem Sprengstoffraum nach der Durchführung der Sprengung zugeführte Gas Argon ist und mit einem Druck von 2000 bis 3000 bar zugeführt wird.

Fig. 1

Fig. 2

Fig. 3

Fig. 4

## Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-1 533 005 (DEUTSCHE EDELSTAHLWERKE) * Seite 2, Absatz 2 - Seite 3, Absatz 3; Seite 5, Absatz 4 - Seite 7, Absatz 1; Figuren 3,3a,4,4a,5 * | 1,2,9 | B 22 F 3/08 B 01 J 3/08 |
| A | | 10,11 | |
| A | US-A-3 157 498 (L. ZERNOW et al.) * Figuren 1-6; Spalte 1, Zeilen 11-14,41-53; Spalte 2, Zeile 5 - Spalte 4, Zeile 36 * | 1,3,5,8 | |
| A | US-A-3 608 014 (A.S. BALCHAN et al.) * Zusammenfassung; Spalte 5, Zeilen 6-32; Figuren 1,2 * | 1,2 | |

| | RECHERCHIERTE SACHGEBIETE (Int. Cl.4) |
|---|---|
| | B 01 J B 22 F B 30 B |

Der vorliegende Recherchenbericht wurde für alle Patentansprüche erstellt

| Recherchenort | Abschlußdatum der Recherche | Prüfer |
|---|---|---|
| DEN HAAG | 04-09-1989 | SIEM T.D. |